(19) Europäisches Patentamt
European Patent Office
Office européen des brevets

(11) **EP 2 039 166 B1**

(12) **EUROPEAN PATENT SPECIFICATION**

(45) Date of publication and mention
of the grant of the patent:
**10.08.2011 Bulletin 2011/32**

(51) Int Cl.:
*H04N 7/26* (2006.01)       *H04N 7/24* (2011.01)

(21) Application number: **07733238.5**

(22) Date of filing: **15.06.2007**

(86) International application number:
**PCT/GB2007/002234**

(87) International publication number:
**WO 2007/144640 (21.12.2007 Gazette 2007/51)**

(54) **METHOD OF AND APPARATUS FOR PROCESSING IMAGE DATA**

VERFAHREN UND VORRICHTUNG ZUM VERARBEITEN VON BILDDATEN

PROCÉDÉ ET APPAREIL DE TRAITEMENT DE DONNÉES D'IMAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **16.06.2006 GB 0611969**

(43) Date of publication of application:
**25.03.2009 Bulletin 2009/13**

(73) Proprietor: **The Robert Gordon University Aberdeen, AB10 1FR (GB)**

(72) Inventors:
 • **RICHARDSON, Iain**
   **Aberdeen AB11 6DU (GB)**
 • **MUIR, Laura, Joy**
   **Alford AB33 8PG (GB)**
 • **BHAT, Abharana**
   **Schoolhill**
   **Aberdeen AB10 1FR (GB)**
 • **ZHONG, Ying**
   **St Neots**
   **Cambridgeshire PE19 8PB (GB)**
 • **SHAN, Kang**
   **St. Neots**
   **Cambridgeshire PE19 2RN (GB)**

(74) Representative: **Peter, Kenneth William**
   **Murgitroyd & Company**
   **Scotland House**
   **165-169 Scotland Street**
   **Glasgow G5 8PL (GB)**

(56) References cited:
   **WO-A-2005/020584        US-A1- 2002 141 650**
   **US-A1- 2003 081 836**

 • **MUIR L J ET AL: "VIDEO TELEPHONY FOR THE DEAF: ANALYSIS AND DEVELOPMENT OF AN OPTIMISED VIDEO COMPRESSION PRODUCT" PROCEEDINGS ACM MULTIMEDIA 2002. 10TH. INTERNATIONAL CONFERENCE ON MULTIMEDIA. JUAN-LES-PINS, FRANCE, DEC. 1 - 6, 2002, ACM INTERNATIONAL MULTIMEDIA CONFERENCE, NEW YORK, NY : ACM, US, vol. CONF. 10, 1 December 2002 (2002-12-01), pages 650-652, XP001175070 ISBN: 1-58113-620-X**
 • **GUARNIERI G ET AL: "Fast bilateral filter for edge-preserving smoothing" ELECTRONICS LETTERS, IEE STEVENAGE, GB, vol. 42, no. 7, 30 March 2006 (2006-03-30), pages 396-397, XP006026407 ISSN: 0013-5194**
 • **DURAND F ET AL: "Fast Bilateral Filtering for the Display of High-Dynamic-Range Images" ACM TRANSACTIONS ON GRAPHICS, ACM, NEW YORK, NY, US, vol. 21, no. 3, July 2002 (2002-07), pages 257-266, XP002312495 ISSN: 0730-0301**
 • **TOMASI C ET AL: "Bilateral filtering for gray and color images" 6TH INTERNATIONAL CONFERENCE ON COMPUTER VISION. ICCV '98. BOMBAY, JAN. 4 - 7, 1998, IEEE INTERNATIONAL CONFERENCE ON COMPUTER VISION, NEW YORK, NY : IEEE, US, 4 January 1998 (1998-01-04), pages 839-846, XP000926378 ISBN: 0-7803-5098-7**

**Description**

Field of the invention

The invention relates to a method of and apparatus for processing image data. The invention also relates in particular but not exclusively to video processing apparatus and video encoder apparatus using such a method of and apparatus for processing image data.

Background to the invention

Low bit-rate real time video streams (below around 200 kbits/s) are often characterised by low-resolution, low frame-rates and blocky images. These characteristics normally arise because video encoders reduce the quality of the video content to match the available bandwidth.

The spatial resolution of the human visual system is highest around the point of gaze (i.e. fixation) and/or attention and decreases rapidly with increasing eccentricity. As a result, areas in a video stream are encoded at a higher quality than is needed because these areas fall outside the areas of fixation or attention. Conversely, areas of fixation or attention may be encoded at a quality that is below a deemed acceptable level of resolution of the human visual system.

It is known to apply what is termed content-prioritised video coding to video streams. Content-prioritised video coding involves improving the subjective quality of low bitrate video sequences by coding parts of the video stream that are of interest to a viewer at a high quality compared to other parts of the video stream. Content-prioritised video coding has been applied in visual communication apparatus, such as sign language communication systems, videophones, surveillance apparatus and in teleconferencing. A technique employed in content prioritised video coding is to process video frames of a video stream such that the video frames have a spatial resolution that matches the space-variant resolution of the human visual system; such a technique is often termed foveation.

The present inventor has appreciated shortcomings of the above described approaches to processing a video stream to provide for efficient use of limited channel bandwidth whilst providing for an acceptable level of quality for the viewer of the video stream.

It is therefore an aim for the present invention to provide a method of processing image data corresponding to an image to be viewed by a viewer.

It is a further aim for the present invention to provide for an apparatus for processing image data corresponding to an image to be viewed by a viewer.

Statement of invention

The present invention has been devised in the light of the inventors' appreciation of the shortcoming of known approaches. Thus, according to a first aspect of the present invention, there is provided a method of processing image data corresponding to an image to be viewed by a viewer, the method comprising:

identifying at least one part of the image, the identified at least one part being of interest to the viewer; and
filtering the image data with a bilateral filter, the filtering being selective in dependence on the identified at least one part of the image.

In use, the method is used to identify at least one part of the image that is of interest to a viewer. The identified at least one part might, for example, be a face of a person in the image, which is more likely to be of interest to the viewer than a background to the face or the rest of the person in the image. The image data is filtered in dependence on the identified at least one part of the image, such as the face of the person. Thus, filtering of the image data may differ from one part to another across the image.

An advantage is that the present invention can be used with standard video encoders and standard video encoding formats. Such backward compatibility of the present invention with standard encoders and encoding formats contrasts with known approaches of developing more sophisticated encoders that compress video stream data on a spatially variable basis.

Furthermore, the use of a bilateral filter according to the present invention offers advantages over known approaches to image data processing which rely on foveation. Foveation is typically applied in dependence on where a viewer directs his gaze or where a viewer is expected to direct his gaze. The present invention involves processing image data in dependence on a part of the image that is of interest to the viewer. Such a part of the image need not be where the viewer directs his gaze but may be a part of the image, such as a person's face, that is of interest to the viewer in terms of visual.information conveyed by that part of the image to the viewer. Thus, the step according to the invention of identifying at least one part of the image may be content led rather than being led by where the viewer directs his gaze. In other words, the present invention may relate to what the viewer perceives from an image rather than what he merely sees in an image. The bilateral filter of the present invention provides a means of processing image data that may be compatible with the perception based approach compared, for example, with known approaches involving eye tracking and foveation mapping. More specifically, a characteristic of the bilateral filter may be more readily changed to take account of a change in a part of interest to a viewer from one image to another. Also, a bilateral filter can provide for the preservation of edges of features in an image that are located separately from where the viewer is directing his gaze. Also, a selective bilateral filter can provide for the preservation of edges in an image that are located where the viewer is directing his gaze, whilst preserving fine detail of features in an image that are of particular interest but are not necessarily located where the viewer is directing his gaze.

More specifically, the filtering may comprise filtering the image data such that data for the identified at least one part is of higher fidelity than data for at least one other part of the image other than the identified at least one part. In use, the filtering may be selective to provide for a variation in fidelity across the image that is in accordance with a viewer's focus of interest within the image.

Alternatively or in addition, the identified at least one part of the image may not be filtered and at least one other part of the image other than the identified at least one part may be filtered. Thus, the fidelity of the identified at least one part of an image may be preserved and the fidelity of the at least one other part of the image may be reduced.

Alternatively or in addition, the identified at least one part of the image may be filtered to a first extent and at least one other part of the image other than the identified at least one part may be filtered to a second extent, the second extent being greater than the first extent.

Alternatively or in addition, an extent of filtering of image data may progressively change from a part of the image of interest to the viewer to another part of the image.

More specifically, the extent of filtering may change progressively in accordance with a Gaussian distribution.

Alternatively or in addition, the method may comprise forming a spatial weighting map in dependence on the identified at least one part of the image, the spatial weighting map corresponding at least in part to extents of interest to a viewer of parts of an image.

More specifically, the step of filtering may be carried out in dependence on the spatial weighting map.

Alternatively or in addition, the spatial weighting map may be formed in dependence on a foveation map.

Alternatively or in addition, the spatial weighting map may be formed in dependence on a weighting function (CT), the weighting function being represented by:

$$CT(f,e) = CT_O \exp\left(\alpha f \frac{e+e_2}{e_2}\right)$$

where CTo is the minimum contrast threshold of the visual system, $\alpha$ is the spatial frequency decay constant, $e_2$ is epsilon2, the half-resolution eccentricity (in degrees) at which the visual acuity is half as good as the centre of the fovea and f is the maximum spatial frequency discernible at a given retinal eccentricity e (in degrees).

Alternatively or in addition, the bilateral filter may filter image data in dependence on a predetermined range value.

More specifically, the bilateral filter may be operative not to filter image data when a difference in values of proximal image data sets, e.g. individual pixels of image data, exceeds the predetermined range value.

Alternatively or in addition, where the step of filtering is carried out in dependence on a spatial weighting map, the predetermined range value may be determined on the basis of the spatial weighting map.

More specifically, the predetermined range value for a particular pixel may be substantially equal to a corresponding weighting value contained in the spatial weighting map.

Alternatively or in addition, a predetermined range value may be modified by a scale factor, the scale factor depending on a predetermined change in fidelity of the image from a first part of the image to a second part of the image.

Alternatively or in addition, the predetermined range value may be given by:

$$\sigma_R(i,j) = (Map(i,j) * Scalefactor) - Scalefactor + 1$$

where $\sigma_R$ is the predetermined range value, I and j are x and y coordinates of a pixel being filtered, Map is a spatial weighting map and Scalefactor is a scalefactor to be applied to the predetermined range value.

Alternatively or in addition, the method may further comprise filtering the image data in dependence on a foveation map.

Alternatively or in addition, identifying at least one part of the image may comprise identifying a location of the at least one part within the image.

Alternatively or in addition, the method may comprise identifying a plurality of parts of the image, the identified plurality of parts being of interest to the viewer.

Alternatively or in addition, the method may process a series of images to be viewed by a viewer.

More specifically, the series of images may be comprised in a video stream to be viewed by a viewer.

Alternatively or in addition, identifying at least one part of the image may comprise identifying a part of a person comprised in the image.

More specifically, identifying a part of the person may comprise identifying a face of the person.

Alternatively or in addition and where the image to be viewed is comprised in a video stream to be viewed by the viewer, the method may comprise following the at least one identified part from one image to another image. Thus, the step of following the at least one identified part may be carried out by a tracker algorithm, such as a face tracker algorithm.

The method may be employed prior to an encoding step. Thus, alternatively or in addition, the method may further comprise a further step of encoding data filtered with the bilateral filter.

More specifically, the encoding step may comprise compression of the image data.

More specifically, the compression of the image data may comprise variable compression of image data.

According to a second aspect of the present invention, there is provided a computer program comprising executable code that upon installation on a computer causes the computer to execute the procedural steps of:

identifying at least one part of an image to be viewed by a viewer, the identified at least one part of the image being of interest to the viewer; and

filtering image data corresponding to the image with a bilateral filter, the filtering being selective in dependence on the identified at least one part of the image.

More specifically, the computer program may be embodied on at least one of: a data carrier; and read-only memory.

Alternatively or in addition, the computer program may be stored in computer memory.

Alternatively or in addition, the computer program may be carried on an electrical carrier signal.

Further embodiments of the second aspect of the present invention may further comprise one or more features of the first aspect of the invention.

According to a third aspect of the present invention, there is provided apparatus for processing image data corresponding to an image to be viewed by a viewer, the apparatus comprising:

an identifier operative to identify at least one part of the image, the identified at least one part being of interest to the viewer; and

a bilateral filter operative to filter image data corresponding to the image, the filtering being selective in dependence on the identified at least one part of the image.

Embodiments of the third aspect of the present invention may comprise one or more features of the first aspect of the present invention.

According to a fourth aspect of the present invention, there is provided a video processing apparatus comprising processing apparatus according to the third aspect of the invention, the video processing apparatus being operative to filter image data prior to encoding of the image data by a video encoder.

According to a fifth aspect of the present invention, there is provided a video encoder apparatus comprising processing apparatus according to the third aspect of the invention, the video encoder apparatus being operative to filter and encode image data.

A bilateral filter is a combination of an averaging filter and a range filter. This means that the bilateral filter operates to average differences between pixel values, such as might be caused by noise or small and thus immaterial amplitude changes, except where there is a significant change in pixel values. Where there is a significant change in pixel values there is no averaging carried out by the bilateral filter. Thus, the term bilateral filter as used herein is intended to cover other filters performing the same function.

More specifically, the bilateral filter may comprise: a spatial or spatial-temporal filter that is operative to modify at least one pixel value in an image; and a range filter (or range function) that is operative to change the operation of the filter in dependence on content of the image in a part of the image.

According to a further aspect of the present invention there is provided a method of prioritising image content for encoding comprising the steps of: identifying one or more regions of interest in the image; generating a spatial weighting map such that the one or more identified regions of interest are required to be at a first weighting; and variably filtering the image according to the spatial weighting map.

According to a yet further aspect of the present invention there is provided a video content prioritiser comprising: a region of interest identifier for identifying one or more regions of interest in the image; a spatial weighting map generator for generating a spatial weighting map such that the one or more identified regions of interest are required to be at a first weighting; and a variable filter for variably filtering the image according to the spatial weighting map.

Embodiments of the further and yet further aspects of the present invention may comprise one or more features of any previous aspect of the invention.

Specific description

The invention will now be described by way of example only and with reference to the accompanying drawings in which:

Figure 1 shows a flow diagram of a video pre-encoding process;

Figure 2 shows a 3D representation of a spatial weighting map; and

Figure 3 shows a graph of acceptable quality versus bitrate for video with varying amounts of pre-encoding according to the present invention.

The present invention relates to the problem, amongst others, that transmission bandwidth limitations require more compression to be applied than is possible through standard video encoding methods. The present invention addresses this problem by applying a spatially variant filter to the image without degrading its subjective quality. The filter maintains high fidelity around a region of interest, while reducing the image fidelity away from the point of fixation thus prioritising the resolution according to content. As parts of the image have reduced fidelity, the image can be compressed with standard video coding methods more than was possible previously and without reducing the subjective quality, thereby requiring a smaller bandwidth for the video images.

The information content of an image is reduced by filtering with a bilateral filter.

It should be noted that, in the context of the present invention, fidelity and resolution are two different concepts. Fidelity relates to the accuracy with which an image is reproduced with regard to its source. Resolution, which in this context is short for image resolution, refers to the level of detail within an image and is most often referred to in terms of the number of pixels in a particular area. A reduction in resolution for a particular area decreases the number of effective pixels in that area. Whereas, a reduction in fidelity may not alter the resolution, or at least not the resolution alone, but will instead preserve certain features in the image, such as edges, and remove others.

The bilateral filter is an edge-preserving smoothing filter. It is a combination of a Gaussian low-pass filter and a range filter. The Gaussian filter applies uniform blurring to the image regardless of the pixel intensity values. A range filter takes pixel intensity values into account by averaging pixels with similar intensities and not averaging pixels with significantly different intensities to thereby preserve the edges.

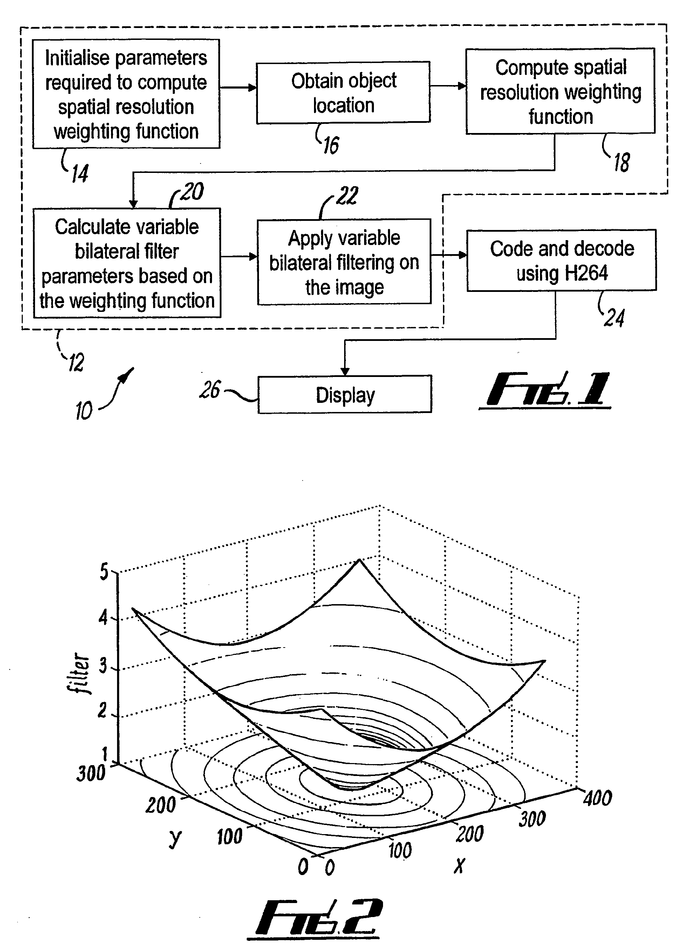

Referring to Fig. 1, a flow diagram of a video encoding system 10, including a video pre-encoder 12 according to the present invention, is shown.

The system 10 is first initialised with an initialisation process 14. The process 14 initialises the video pre-encoder 12 with required parameters to construct an appropriate spatial weighting function. These parameters are discussed in more detail in relation to the weighting function below.

The next stage involves obtaining the location of one or more objects or regions of interest. A region of interest locating process 16 applies an appropriate search algorithm to locate the region of interest. The region of interest will depend on the application of the video encoder/decoder (i.e. codec). For example, a common application is to prioritise faces in video, especially in video conferencing. In this case, the location of the face in each frame is obtained from a face tracking module.

The identification of regions of interest, such as human faces and/or human figures, in a video scene, is based on research into visual quality (e.g. Zhong, Richardson, Sahraie and McGeorge, "Influence of Task and Scene Content on Subjective Video Quality", Lecture Notes on Computer Science, Volume 3211/2004, also Muir and Richardson, "Perception of Sign Language and its Application to Visual Communication for Deaf People", Journal of Deaf Studies and Deaf Education 10:4, September 2005).

Based on the results of process 16, a spatial weighting map is formed using a weighting function, in a spatial weighting calculation process 18. The spatial weighting map is designed to keep the region or regions of interest at a first weighting value, representing a first quality or fidelity, and then to decrease the quality or fidelity with increasing eccentricity from the region or regions to a second quality or fidelity, represented by a second weighting value.

A variable filter calculation process 20 then processes the spatial weighting map to calculate appropriate filter parameters such that filtering of the image will be varied according to the spatial weighting map.

A variable filtering process 22 then filters the image according to the filter parameters calculated in process 20.

After the image data has been filtered according to the present invention, it is then forwarded to a standard coding system 24 and, eventually, to a display 26.

Region of Interest Identification

The present invention enables video images to be more highly compressed by taking advantage of the manner in which the human visual system analyses images. That is, where the natural tendency is to look at a particular region of interest, there is no reason to produce the other areas of the video stream in high fidelity as this is wasted on the human visual system.

As such, the present invention is applicable to a wide range of video streams where regions of interest can be identified. For example, in many movie pictures, the director is actually continually ensuring that viewers look at a particular area of the video image. Where such an area can be identified, the present invention is used to produce high fidelity where the viewers should be looking and lower fidelity elsewhere. This may enable less bandwidth to be used to, for example, stream video to mobile devices.

However, the present invention is particularly applicable in video streams where a human face is the main focus. Human faces are important areas of fixation in applications such as sign language communications, television broadcasting, surveillance, teleconferencing and videophones.

Locations of faces in each frame can be obtained by using a face tracker. Face,tracking can be carried out by a number of known methods, such as an elliptical face tracker described by Birchfield et al (S. Birchfield, "Elliptical head tracking using intensity gradients and color histograms", Proceedings of the IEEE Conference on Computer Vision and Pattern Recognition, pages 232-237, 1998).

Spatial Weighting Map

After the region or regions of interest have been identified a spatial weighting map is formed. The map is formed by assigning a weighting value to each pixel of the image according to a weighting function.

The weighting function determines which resolutions are appropriate at each point in the processed image and, in this example, is intended to match the resolution variance of the human visual system.

One such weighting function was developed by Geisler and Perry (W.S. Geisler, J.S. Perry, "A Real-Time Foveated Multi-Resolution System for Low Bandwidth Video Communication." SPIE Proceedings Vol. 3299, 1998).

The weighting function is given in equation (1):

$$CT(f,e) = CT_O \exp\left( \alpha f \, \frac{e + e_2}{e_{2.}} \right) \qquad (1)$$

where, CTo is the minimum contrast threshold of the visual system, $\alpha$ is the spatial frequency decay constant, $e_2$ is epsilon2, the half-resolution eccentricity (in degrees) at which the visual acuity is half as good as the centre of the fovea (the point of best vision in the eye). $f$ is the maximum spatial frequency discernible at a given retinal eccentricity e (in degrees). The amount of degradation in the resolution with increase in eccentricity from point of gaze is controlled by varying the minimum contrast threshold ($CT_o$). Increasing the value of $CT_o$ increases the amount of blurring away from the point of gaze. These values have been psychophysically measured by Arnow et al (T.L. Arnow and W.S. Geisler, "Visual detection following retinal damage: Predictions of an inhomogeneous retinocortical model", SPIE Proceedings: Human Vision and Electronic Imaging, Vol. 2674, pp. 119-130, 1996) to produce a resolution fall-off map that matches the resolution variance of the human visual system. The values used are as follows: $\alpha$ - spatial frequency decay constant = 0.106 Epsilon2 - half-resolution eccentricity = 2.3 $CT_0$ - minimum contrast threshold = 1/64.

In this example, the spatial weighting map produced using the weighting function contains floating point values ranging between 1 and the number of fidelity levels required in the image. If 7 fidelity levels are used in the image then the values in the weighting map will range between 1 and 7. The region of fixation that has to be maintained at the highest fidelity is assigned a value of 1 in the weighting matrix. As the fidelity degrades away from the point of fixation, the values of points in the weighting matrix will increase accordingly. Fig. 2 shows a spatial weighting map generated using the weighting function described in equation (1). The x and y axes represent the two dimensional plane of an image and the "filter" axis represents the weighting value applied to that point of the image. The region of interest, in this example, is towards the centre of the image (approximately x=175 and y=125) and has a weighting value of 1. As the distance increases from the region of interest, the weighting value increases.

It should be appreciated that, where more than one region of interest is identified, the spatial weighting map has more than one minimum point. As such, the areas between regions of interest then contour appropriately to a local maximum or peak.

After the weighting map is computed, the variable filter parameters are calculated based on the map.

In this example, a bilateral filter is used (C. Tomasi and R. Manduchi, "Bilateral filtering for gray and coloured images", Proceedings of IEEE International Conference on Computer Vision, 836-846, 1998). The bilateral filter is an edge-preserving smoothing filter which is a combination of the Gaussian blurring filter and a range filter. In an image neighbourhood that contains pixels with similar intensity values, the bilateral filter acts as a standard Gaussian blurring filter and averages small differences in pixel values caused by noise. If the neighbourhood contains a strong edge, the bilateral filter functions as a range filter to preserve the edge.

The bilateral filter equation is given by equation (2):

$$F(x_0, y_0) = \frac{\sum_{x=-N}^{N} \sum_{y=-N}^{N} I(x, y) W(x, y)}{\sum_{x=-N}^{N} \sum_{y=-N}^{N} W(x, y)} \qquad (2)$$

where W(x,y) is the filter weighting function, I(x,y) is the input image neighbourhood pixel, and the denominator is the normalisation of the weighting function. $F(x_0, y_0)$ is the result of the bilateral filter applied on a 2N+1 neighbourhood. The weighting function W(x,y) is defined using the Gaussian blurring function $W_S(x,y)$ and the range filter function $W_R(x,y)$ is defined as:

$$W(x, y) = W_S(x, y) W_R(x, y) \qquad (3)$$

where

$$W_S(x, y) = \exp\left\{ -\frac{\left((x - x_0)^2 + (y - y_0)^2\right)}{2\sigma_S^2} \right\} \qquad (4)$$

and

$$W_R(x, y) = \exp\left\{ -\frac{(I(x, y) - I(x_0, y_0))^2}{2\sigma_R^2} \right\} \qquad (5)$$

Bilateral filtering of an image is controlled using the two parameters: $\sigma_S$ and $\sigma_R$. $\sigma_S$ in equation (4) is the Gaussian filter parameter that controls the amount of blurring. $\sigma_R$ in equation (5) is the edge stopping function and defines the strengths of edges that will be preserved. When the value of $\sigma_R$ is small, the range filtering dominates because small edges must be preserved. If a large value of $\sigma_R$ is considered, only very strong edges are preserved. A large value of $\sigma_R$ will have very little effect on $\sigma_S$ and the bilateral filter acts as a standard Gaussian filter.

The standard bilateral filter described above can be used to obtain a uniform fidelity image. However, to produce a multi-fidelity image that varies in fidelity in a similar way to the response of the human visual system, a spatially variable filter must be used.

In this example, a variable bilateral filter is used. The variable bilateral filter in combination with the spatial weighting map maintains the region of fixation at highest fidelity and gradually reduces image fidelity away from the region of fixation by increasing the amount of filtering.

The parameters of the variable bilateral filter, $\sigma_S$ and $\sigma_R$, are calculated based on the spatial weighting map that is obtained using the weighting function given in equation (1). The Gaussian filter parameter $\sigma_S$ controls the amount of blurring in the image and has been assigned a constant value. The value of the edge preserving parameter $\sigma_R$ is calculated as shown in equation (6):

$$\sigma_R(i,j) = Map(i,j) \qquad (6)$$

where, Map is the resolution map, I and j are the x- and y- coordinates of the pixel being filtered, $\sigma_R(i,j)$ is the value of the edge preserving parameter for the pixel being filtered. According to equation (6), at the point of fixation $\sigma_R$ will be equal to 1 and hence filtering will not be applied in this region to preserve all the edges. The maximum amount of filtering that can be applied to the peripheral regions of the image using equation (6) depends entirely on the weighting map. To further increase the amount of filtering in the peripheral regions of the image a scale factor is introduced as shown in equation (7):

$$\sigma_R(i,j) = Map(i,j) * Scalefactor \qquad (7)$$

where, Scalefactor is greater than 1 to increase filtering in the peripheral regions. However, to maintain the area of fixation (gaze) at highest resolution, $\sigma_R$ must be equal to 1 to avoid filtering in this region. Hence the scale factor is substracted from equation (7) and a value of 1 is added as shown in equation (8):

$$\sigma_R(i,j) = (Map(i,j) * Scalefactor) - Scalefactor + 1 \qquad (8)$$

After $\sigma_R$ is calculated, bilateral filtering is applied to the image according to equation (3).

During experiments five processed video clips were produced using five different bilateral filter strengths. The bilateral filter strength was varied by varying the Gaussian filter parameter ($\sigma_S$). The $\sigma_S$ values used in the experiment were: 9, 11, 13, 15 and 17. The range filter parameter $\sigma_R$ was calculated using the spatial weighting map. A Scalefactor of 4 was used. Each processed video clip was then coded using a H264 codec for five different target bit-rates: 50kbits/s, 75kbits/s, 100kbits/s, 150kbits/s and 200kbits/s. The coded video clips were evaluated by 14 subjects. These video clips were presented to subjects in an order of increasing bit-rates. This method of evaluation has been used successfully in previous research works (McCarthy et al, 2004). A binary scale (acceptable and non-acceptable) was used to express the judgement of the video quality of each sequence.

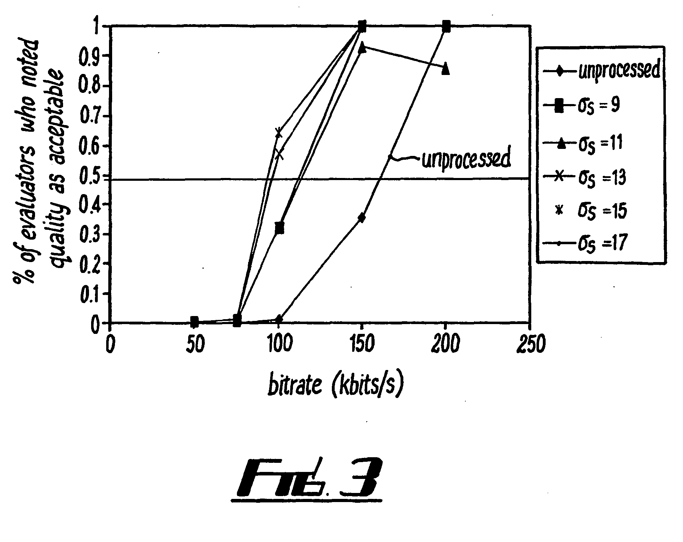

Fig. 3 shows a graph of percentage of evaluators who found the quality of video sequences acceptable for a range of bit-rates.

From the experimental results it was observed that more than 50% of the evaluators found the video quality of the unfiltered H264 encoded sequences to be acceptable at around 160kbits/s. For the H264 encoded sequences that were pre-filtered according to the present invention, more than 50% of the evaluators found that video sequences filtered

using $\sigma_S$ = 13, 15 and 17, had acceptable quality at 100 kbits/s. This implies that a coding gain of around 60 kbits/s can be obtained by using the variable bilateral filter when compared with the unfiltered coded video sequences. The experimental results also indicted that the optimum value of the Gaussian filter parameter is above $\sigma_S$ = 13.

As such, viewers found the pre-filtered coded video to be acceptable at significantly lower bit-rates than the unfiltered coded video.

Prior work on object, or video content, based coding has led to standardised techniques for compressing regions of a video scene (e.g. ISO/IEC 14496 Part 2, "MPEG-4 Visual", 2001, Core Profiles). However, these typically require specialised coding tools that are incompatible with popular block-based video coding methods (e.g. MPEG-4 Visual, Simple and Advanced Simple profiles).

The present invention can be used with any video compression system such as a standard block-based video codec. As a result, specialised object, or video content, based coding tools are not required.

Improvements and modifications to the present invention may be incorporated in the foregoing without departing from the scope of the present invention as defined herein.

## Claims

1. A method of processing image data by electronic methods, the image data corresponding to an image to be viewed by a viewer, the method (10) comprising:

    determining the location of pixels of interest in an image frame of the image data (16) by executing a search algorithm to locate, within the image frame, pixels corresponding to at least one region of the image that is of interest to the viewer;

    forming a spatial weighting map that relates each pixel in the image frame to a weighting value corresponding to a fidelity level (18), each weighting value being determined by a weighting function represented by:

    $$CT(f,e) = CT_O \exp\left( \alpha f \frac{e + e_2}{e_2} \right)$$

    where $CT_O$ is a minimum contrast threshold of the visual system, $\alpha$ is a spatial frequency decay constant, $e_2$ is epsilon2, a half-resolution eccentricity, in degrees, at which visual acuity is half as good as the centre of the fovea and f is a maximum spatial frequency discernible at a given retinal eccentricity e, in degrees, such that a weighting value corresponding to a pixel of interest has a highest fidelity level and weighting values for pixels other than the pixels of interest have gradually reducing fidelity levels as a distance in the image frame increases away from the pixels of interest;

    determining a value for a parameter of a bilateral filter for each pixel in the image frame (20), each parameter value being determined in dependence on the weighting value in the spatial weighting map corresponding to its related pixel; and

    filtering pixels of at least one image frame with the bilateral filter (22).

2. The method according to claim 1, in which the parameter of the bilateral filter is the range parameter of the bilateral filter, the range parameter being operative to determine a strength of edge that is preserved by operation of the bilateral filter.

3. The method according to any preceding claim, in which values for the parameter of the bilateral filter are determined such that the pixels of interest are not filtered and pixels other than the pixels of interest are filtered.

4. The method according to any preceding claim, in which an extent to which pixels are filtered by the bilateral filter changes progressively across the image frame in accordance with a Gaussian distribution.

5. The method according to any one of the preceding claims comprising the step of changing values for the parameter of the bilateral filter from a first image frame to a second image frame.

6. The method according to any one of the preceding claims, in which the step of determining the location of pixels of interest comprises providing data that represents a location of the at least one region of interest prior to executing the search algorithm.

7. The method according to any one of the preceding claims, in which the step of determining the location of pixels of interest comprises executing a tracker algorithm that is operative to follow a change in location of pixels of interest from one image frame to another image frame.

8. The method according to claim 7, in which the parameter values of the bilateral filter change from one image frame to another in dependence on an output from the tracker algorithm.

9. A computer program comprising executable code that upon installation on a computer causes the computer to process image data corresponding to an image to be viewed by a viewer, the image data being processed by the computer executing the steps of:

determining the location of pixels of interest in an image frame of the image data (16) by executing a search algorithm to locate, within the image frame, pixels corresponding to at least one region of the image that is of interest to the viewer;
forming a spatial weighting map that relates each pixel in the image frame to a weighting value corresponding to a fidelity level (18), each weighting value being determined by a weighting function represented by:

$$CT(f,e) = CT_O \exp\left(\alpha f \frac{e + e_2}{e_2}\right)$$

where $CT_O$ is a minimum contrast threshold of the visual system, $\alpha$ is a spatial frequency decay constant, $e_2$ is epsilon2, a half-resolution eccentricity, in degrees, at which visual acuity is half as good as the centre of the fovea and f is a maximum spatial frequency discernible at a given retinal eccentricity e, in degrees, such that a weighting value corresponding to a pixel of interest has a highest fidelity level and weighting values for pixels other than the pixels of interest have gradually reducing fidelity levels as a distance in the image frame increases away from the pixels of interest;
determining a value for a parameter of a bilateral filter for each pixel in the image frame (20), each parameter value being determined in dependence on the weighting value in the spatial weighting map corresponding to its related pixel; and
filtering pixels of at least one image frame with the bilateral filter (22).

10. A computer program according to claim 9, in which the computer program is one of: embodied on a data carrier; embodied in read-only memory; stored in computer memory; and carried on an electrical carrier signal.

11. Apparatus for processing image data by electronic means, the image data corresponding to an image to be viewed by a viewer, the apparatus comprising:

a location determiner operative to determine the location of pixels of interest in an image frame of the image data (16) by executing a search algorithm to locate, within the image frame, pixels corresponding to at least one region of the image that is of interest to the viewer;
a spatial weighting map that relates each pixel in the image frame to a weighting value corresponding to a fidelity level (18), each weighting value having been determined by a weighting function represented by:

$$CT(f,e) = CT_O \exp\left(\alpha f \frac{e + e_2}{e_2}\right)$$

where $CT_O$ is a minimum contrast threshold of the visual system, $\alpha$ is a spatial frequency decay constant, $e_2$ is epsilon2, a half-resolution eccentricity, in degrees, at which visual acuity is half as good as the centre of the fovea and f is a maximum spatial frequency discernible at a given retinal eccentricity e, in degrees, such that a weighting value corresponding to a pixel of interest has a highest fidelity level and weighting values for pixels other than the pixels of interest have gradually reducing fidelity levels as a distance in the image frame increases away from the pixels of interest;

a bilateral filter having a value for a parameter of a bilateral filter for each pixel in the image frame (20), each parameter value having been determined in dependence on the weighting value in the spatial weighting map corresponding to its related pixel, the bilateral filter (22) being operative to filter pixels of at least one image frame.

12. Video processing apparatus comprising processing apparatus according to claim 11, the video processing apparatus being operative to filter image data according to claim 11 prior to encoding of the image data by a video encoder.

**Patentansprüche**

1. Ein Verfahren zum Bearbeiten von Bilddaten durch elektronische Verfahren, wobei die Bilddaten einem von einem Betrachter zu betrachtenden Bild entsprechen, wobei das Verfahren (10) Folgendes beinhaltet:

   Bestimmen der Stelle von Pixeln von Interesse in einem Bildrahmen der Bilddaten (16) durch das Ausführen eines Suchalgorithmus zum Lokalisieren von Pixeln innerhalb des Bildrahmens, die mindestens einem Bereich des Bilds entsprechen, der für den Betrachter von Interesse ist;
   Bilden einer räumlichen Gewichtungskarte, die jedes Pixel in dem Bildrahmen in Beziehung zu einem einem Genauigkeitsgrad (18) entsprechenden Gewichtungswert setzt, wobei jeder Gewichtungswert durch eine Gewichtsfunktion bestimmt wird, dargestellt durch:

$$CT(f, e) = CT_0 \exp\left( \alpha f \frac{e + e_2}{e_2} \right)$$

   wobei $CT_0$ eine Mindestkontrastschwelle des visuellen Systems ist, $\alpha$ eine Raumfrequenzzerfallskonstante ist, $e_2$ Epsilon2, eine Exzentrizität der halben Auflösung in Grad ist, bei der die Sehschärfe halb so gut wie die Mitte der Fovea ist, und f eine maximale räumliche Frequenz, wahrnehmbar bei einer gegebenen retinalen Exzentrizität e in Grad, ist, so dass ein Gewichtungswert, der einem Pixel von Interesse entspricht, einen höchsten Genauigkeitsgrad aufweist und Gewichtungswerte für andere Pixel als die Pixel von Interesse graduell abnehmende Genauigkeitsgrade aufweisen, während sich ein Abstand in dem Bildrahmen von den Pixeln von Interesse weg erhöht;
   Bestimmen eines Werts für einen Parameter eines bilateralen Filters für jedes Pixel in dem Bildrahmen (20), wobei jeder Parameterwert in Abhängigkeit von dem Gewichtungswert in der räumlichen Gewichtungskarte, der seinem zugehörigen Pixel entspricht, bestimmt wird; und
   Filtern von Pixeln von mindestens einem Bildrahmen mit dem bilateralen Filter (22).

2. Verfahren gemäß Anspruch 1, bei dem der Parameter des bilateralen Filters der Reichweitenparameter des bilateralen Filters ist, wobei der Reichweitenparameter betriebsfähig ist, um eine Stärke der Kante, die durch den Betrieb des bilateralen Filters bewahrt wird, zu bestimmen.

3. Verfahren gemäß einem der vorhergehenden Ansprüche, bei dem Werte für den Parameter des bilateralen Filters so bestimmt werden, dass die Pixel von Interesse nicht gefiltert werden und andere Pixel als die Pixel von Interesse gefiltert werden.

4. Verfahren gemäß einem der vorhergehenden Ansprüche, bei dem sich ein Ausmaß, in dem die Pixel durch den bilateralen Filter gefiltert werden, über den Bildrahmen hinweg gemäß einer Gaußschen Verteilung progressiv ändert.

5. Verfahren gemäß einem der vorhergehenden Ansprüche, das den Schritt des Änderns der Werte für den Parameter des bilateralen Filters von einem ersten Bildrahmen zu einem zweiten Bildrahmen beinhaltet.

6. Verfahren gemäß einem der vorhergehenden Ansprüche, bei dem der Schritt des Bestimmens der Stelle von Pixeln von Interesse das Bereitstellen von Daten, die eine Stelle des mindestens einen Bereichs von Interesse darstellen, vor dem Ausführen des Suchalgorithmus beinhaltet.

7. Verfahren gemäß einem der vorhergehenden Ansprüche, bei dem der Schritt des Bestimmens der Stelle von Pixeln von Interesse das Ausführen eines Tracker-Algorithmus, der betriebsfähig ist, um einer Änderung der Stelle von Pixeln von Interesse von einem Bildrahmen zu einem anderen Bildrahmen zu folgen, beinhaltet.

8. Verfahren gemäß Anspruch 7, bei dem sich die Parameterwerte des bilateralen Filters in Abhängigkeit von einer Ausgabe von dem Tracker-Algorithmus von einem Bildrahmen zu einem anderen ändern.

9. Ein Computerprogramm, das einen ausführbaren Code beinhaltet, das bei Installation auf einem Computer bewirkt, dass der Computer Bilddaten, die einem von einem Betrachter zu betrachtenden Bild entsprechen, bearbeitet, wobei die Bilddaten von dem Computer unter Ausführung der folgenden Schritte bearbeitet werden:

Bestimmen der Stelle von Pixeln von Interesse in einem Bildrahmen der Bilddaten (16) durch das Ausführen eines Suchalgorithmus zum Lokalisieren von Pixeln innerhalb des Bildrahmens, die mindestens einem Bereich des Bilds entsprechen, der für den Betrachter von Interesse ist;
Bilden einer räumlichen Gewichtungskarte, die jedes Pixel in dem Bildrahmen in Beziehung zu einem einem Genauigkeitsgrad (18) entsprechenden Gewichtungswert setzt, wobei jeder Gewichtungswert durch eine Gewichtsfunktion bestimmt wird, dargestellt durch:

$$CT(f,e) = CT_0 \exp\left(\alpha f \frac{e + e_2}{e_2}\right)$$

wobei $CT_0$ eine Mindestkontrastschwelle des visuellen Systems ist, $\alpha$ eine Raumfrequenzzerfallskonstante ist, $e_2$ Epsilon2, eine Exzentrizität der halben Auflösung in Grad ist, bei der die Sehschärfe halb so gut wie die Mitte der Fovea ist, und f eine maximale räumliche Frequenz, wahrnehmbar bei einer gegebenen retinalen Exzentrizität e in Grad, ist, so dass ein Gewichtungswert, der einem Pixel von Interesse entspricht, einen höchsten Genauigkeitsgrad aufweist und Gewichtungswerte für andere Pixel als die Pixel von Interesse graduell abnehmende Genauigkeitsgrade aufweisen, während sich ein Abstand in dem Bildrahmen von den Pixeln von Interesse weg erhöht;
Bestimmen eines Werts für einen Parameter eines bilateralen Filters für jedes Pixel in dem Bildrahmen (20), wobei jeder Parameterwert in Abhängigkeit von dem Gewichtungswert in der räumlichen Gewichtungskarte, der seinem zugehörigen Pixel entspricht, bestimmt wird; und
Filtern von Pixeln von mindestens einem Bildrahmen mit dem bilateralen Filter (22).

10. Computerprogramm gemäß Anspruch 9, bei dem das Computerprogramm eines von Folgendem ist: enthalten auf einem Datenträger, enthalten in einem Festwertspeicher, gespeichert in einem Computerspeicher und getragen auf einem elektrischen Trägersignal.

11. Eine Vorrichtung zum Bearbeiten von Bilddaten durch elektronische Mittel, wobei die Bilddaten einem von einem Betrachter zu betrachtenden Bild entsprechen, wobei die Vorrichtung Folgendes beinhaltet:

einen Stellendeterminierer, der betriebsfähig ist, um die Stelle von Pixeln von Interesse in einem Bildrahmen der Bilddaten (16) durch das Ausführen eines Suchalgorithmus zum Lokalisieren von Pixeln innerhalb des Bildrahmens, die mindestens einem Bereich des Bilds entsprechen, der für den Betrachter von Interesse ist, zu bestimmen
eine räumliche Gewichtungskarte, die jedes Pixel in dem Bildrahmen in Beziehung zu einem einem Genauigkeitsgrad (18) entsprechenden Gewichtungswert setzt, wobei jeder Gewichtungswert durch eine Gewichtsfunktion bestimmt worden ist, dargestellt durch:

$$CT(f,e) = CT_0 \exp\left(\alpha f \frac{e + e_2}{e_2}\right)$$

wobei $CT_0$ eine Mindestkontrastschwelle des visuellen Systems ist, $\alpha$ eine Raumfrequenzzerfallskonstante ist, $e_2$ Epsilon2, eine Exzentrizität der halben Auflösung in Grad ist, bei der die Sehschärfe halb so gut wie die Mitte der Fovea ist, und f eine maximale räumliche Frequenz, wahrnehmbar bei einer gegebenen retinalen Exzentrizität e in Grad, ist, so dass ein Gewichtungswert, der einem Pixel von Interesse entspricht, einen höchsten Genauigkeitsgrad aufweist und Gewichtungswerte für andere Pixel als die Pixel von Interesse graduell abnehmende Genauigkeitsgrade aufweisen, während sich ein Abstand in dem Bildrahmen von den Pixeln von Interesse weg erhöht;
einen bilateralen Filter, der einen Wert für einen Parameter eines bilateralen Filters für jedes Pixel in dem Bildrahmen (20) aufweist, wobei jeder Parameterwert in Abhängigkeit von dem Gewichtungswert in der räumlichen Gewichtungskarte, der seinem zugehörigen Pixel entspricht, bestimmt worden ist; wobei der bilaterale Filter (22) betriebsfähig ist, um Pixel von mindestens einem Bildrahmen zu filtern.

12. Eine Videobearbeitungsvorrichtung, die eine Bearbeitungsvorrichtung gemäß Anspruch 11 beinhaltet, wobei die Videobearbeitungsvorrichtung betriebsfähig ist, um Bilddaten gemäß Anspruch 11 vor dem Codieren der Bilddaten durch einen Videocodierer zu filtern.

**Revendications**

1. Une méthode pour traiter des données d'image par des méthodes électroniques, les données d'image correspondant à une image devant être vue par un observateur, la méthode (10) comprenant :

déterminer l'emplacement de pixels d'intérêt dans un cadre d'image des données d'image (16) en exécutant un algorithme de recherche afin de situer, au sein du cadre d'image, des pixels correspondant à au moins une région de l'image qui est d'intérêt pour l'observateur ;
former une carte de pondération spatiale qui rapporte chaque pixel dans le cadre d'image à une valeur de pondération correspondant à un niveau de fidélité (18), chaque valeur de pondération étant déterminée par une fonction de pondération représentée par :

$$CT(f, e) = CT_0 \exp\left( \alpha f \frac{e + e_2}{e_2} \right)$$

où $CT_0$ est un seuil de contraste minimum du système visuel, $\alpha$ est une constante d'affaiblissement de fréquence spatiale, $e_2$ est epsilon2, une excentricité de demi-résolution, en degrés, à laquelle l'acuité visuelle est à moitié aussi bonne que le centre de la fovéa et f est une fréquence spatiale maximum perceptible à une excentricité rétinienne donnée e, en degrés, de telle sorte qu'une valeur de pondération correspondant à un pixel d'intérêt ait un niveau de fidélité le plus élevé et que des valeurs de pondération pour des pixels autres que les pixels d'intérêt aient des niveaux de fidélité qui se réduisent progressivement à mesure qu'une distance dans le cadre d'image augmente en s'éloignant des pixels d'intérêt ; déterminer une valeur pour un paramètre d'un filtre bilatéral pour chaque pixel dans le cadre d'image (20), chaque valeur de paramètre étant déterminée en fonction de la valeur de pondération dans la carte de pondération spatiale correspondant à son pixel apparenté ; et filtrer des pixels d'au moins un cadre d'image avec le filtre bilatéral (22).

2. La méthode selon la revendication 1, dans laquelle le paramètre du filtre bilatéral est le paramètre da plage du filtre bilatéral, le paramètre de plage étant opérationnel pour déterminer une résistance de bord qui est conservée par l'opération du filtre bilatéral.

3. La méthode selon n'importe quelle revendication précédente, dans laquelle des valeurs pour le paramètre du filtre bilatéral sont déterminées de telle sorte que les pixels d'intérêt ne soient pas filtrés et que des pixels autres que les pixels d'intérêt soient filtrés.

4. La méthode selon n'importe quelle revendication précédente, dans laquelle une étendue sur laquelle les pixels sont filtrés par le filtre bilatéral change progressivement de part et d'autre du cadre d'image conformément à une distribution gaussienne.

5. La méthode selon n'importe laquelle des revendications précédentes comprenant l'étape de changer des valeurs pour le paramètre du filtre bilatéral d'un premier cadre d'image à un deuxième cadre d'image.

**6.** La méthode selon n'importe laquelle des revendications précédentes, dans laquelle l'étape de déterminer l'emplacement de pixels d'intérêt comprend fournir des données qui représentent un emplacement de cette au moins une région d'intérêt avant d'exécuter l'algorithme de recherche.

**7.** La méthode selon n'importe laquelle des revendications précédentes, dans laquelle l'étape de déterminer l'emplacement de pixels d'intérêt comprend exécuter un algorithme de traqueur qui est opérationnel pour suivre un changement dans l'emplacement de pixels d'intérêt d'un cadre d'image à un autre cadre d'image.

**8.** La méthode selon la revendication 7, dans laquelle les valeurs de paramètre du filtre bilatéral changent d'un cadre d'image à un autre en fonction d'une sortie provenant de l'algorithme de traqueur.

**9.** Un programme informatique comprenant un code exécutable qui, lors de l'installation sur un ordinateur, amène l'ordinateur à traiter des données d'image correspondant à une image devant être vue par un observateur, les données d'image étant traitées par l'ordinateur exécutant les étapes de :

déterminer l'emplacement de pixels d'intérêt dans un cadre d'image des données d'image (16) en exécutant un algorithme de recherche afin de situer, au sein du cadre d'image, des pixels correspondant à au moins une région de l'image qui est d'intérêt pour l'observateur ;
former une carte de pondération spatiale qui rapporte chaque pixel dans le cadre d'image à une valeur de pondération correspondant à un niveau de fidélité (18), chaque valeur de pondération étant déterminée par une fonction de pondération représentée par :

$$CT(f,e) = CT_0 \exp\left(\alpha f \frac{e + e_2}{e_2}\right)$$

où $CT_0$ est un seuil de contraste minimum du système visuel, $\alpha$ est une constante d'affaiblissement de fréquence spatiale, $e_2$ est epsilon2, une excentricité de demi-résolution, en degrés, à laquelle l'acuité visuelle est à moitié aussi bonne que le centre de la fovéa et f est une fréquence spatiale maximum perceptible à une excentricité rétinienne donnée e, en degrés, de telle sorte qu'une valeur de pondération correspondant à un pixel d'intérêt ait un niveau de fidélité le plus élevé et que des valeurs de pondération pour des pixels autres que les pixels d'intérêt aient des niveaux de fidélité qui se réduisent progressivement à mesure qu'une distance dans le cadre d'image augmente en s'éloignant des pixels d'intérêt ; déterminer une valeur pour un paramètre d'un filtre bilatéral pour chaque pixel dans le cadre d'image (20), chaque valeur de paramètre étant déterminée en fonction de la valeur de pondération dans la carte de pondération spatiale correspondant à son pixel apparenté ; et filtrer des pixels d'au moins un cadre d'image avec le filtre bilatéral (22).

**10.** Un programme informatique selon la revendication 9, dans lequel le programme informatique est un programme informatique parmi : incorporé sur un support de données ; incorporé dans une mémoire morte ; stocké dans une mémoire d'ordinateur ; et porté sur un signal porteur électrique.

**11.** Appareil destiné à traiter des données d'image par des moyens électroniques, les données d'image correspondant à une image devant être vue par un observateur, l'appareil comprenant :

un déterminateur d'emplacement opérationnel pour déterminer l'emplacement de pixels d'intérêt dans un cadre d'image des données d'image (16) en exécutant un algorithme de recherche afin de situer, au sein du cadre d'image, des pixels correspondant à au moins une région de l'image qui est d'intérêt pour l'observateur ;
une carte de pondération spatiale qui rapporte chaque pixel dans le cadre d'image à une valeur de pondération correspondant à un niveau de fidélité (18), chaque valeur de pondération ayant été déterminée par une fonction de pondération représentée par :

$$CT(f,e) = CT_0 \exp\left(\alpha f \frac{e + e_2}{e_2}\right)$$

où CTo est un seuil de contraste minimum du système visuel, $\alpha$ est une constante d'affaiblissement de fréquence spatiale, $e_2$ est epsilon2, une excentricité de demi-résolution, en degrés, à laquelle l'acuité visuelle est à moitié aussi bonne que le centre de la fovéa et f est une fréquence spatiale maximum perceptible à une excentricité rétinienne donnée e, en degrés, de telle sorte qu'une valeur de pondération correspondant à un pixel d'intérêt ait un niveau de fidélité le plus élevé et que des valeurs de pondération pour des pixels autres que les pixels d'intérêt aient des niveaux de fidélité qui se réduisent progressivement à mesure qu'une distance dans le cadre d'image augmente en s'éloignant des pixels d'intérét ; un filtre bilatéral ayant une valeur pour un paramètre d'un filtre bilatéral pour chaque pixel dans le cadre d'image (20), chaque valeur de paramètre ayant été déterminée en fonction de la valeur de pondération dans la carte de pondération spatiale correspondant à son pixel apparenté, le filtre bilatéral (22) étant opérationnel pour filtrer des pixels d'au moins un cadre d'image.

**12.** Appareil de traitement de vidéo comprenant un appareil de traitement selon la revendication 11, l'appareil de traitement de vidéo étant opérationnel pour filtrer des données d'image selon la revendication 11 avant le codage des données d'image par un codeur vidéo.

| Initialise parameters required to compute spatial resolution weighting function | → | Obtain object location | → | Compute spatial resolution weighting function |

14

16

18

| Calculate variable bilateral filter parameters based on the weighting function | → | Apply variable bilateral filtering on the image | → | Code and decode using H264 |

20

22

24

12

10

26

| Display |

*Fig.1*

*Fig.2*

*Fig. 3*

**EP 2 039 166 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Zhong ; Richardson ; Sahraie ; McGeorge.** Influence of Task and Scene Content on Subjective Video Quality. *Lecture Notes on Computer Science,* 2004, vol. 3211
- **Muir ; Richardson.** Perception of Sign Language and its Application to Visual Communication for Deaf People. *Journal of Deaf Studies and Deaf Education,* September 2005, vol. 10, 4
- **S. Birchfield.** Elliptical head tracking using intensity gradients and color histograms. *Proceedings of the IEEE Conference on Computer Vision and Pattern Recognition,* 1998, 232-237
- **W.S. Geisler ; J.S. Perry.** A Real-Time Foveated Multi-Resolution System for Low Bandwidth Video Communication. *SPIE Proceedings,* 1998, vol. 3299
- **T.L. Arnow ; W.S. Geisler.** Visual detection following retinal damage: Predictions of an inhomogeneous retinocortical model. *SPIE Proceedings: Human Vision and Electronic Imaging,* 1996, vol. 2674, 119-130
- **C. Tomasi ; R. Manduchi.** Bilateral filtering for gray and coloured images. *Proceedings of IEEE International Conference on Computer Vision,* 1998, 836-846